# EUROPÄISCHE PATENTSCHRIFT

(11) **EP 3 414 129 B1**
(45) Veröffentlichungstag und Bekanntmachung des Hinweises auf die Patenterteilung: **26.01.2022**
(21) Anmeldenummer: 17703106.9
(22) Anmeldetag: 01.02.2017
(51) Int. Cl.: B60Q 3/82, B60Q 3/74

(54) **LEUCHTMODUL EINES FAHRZEUGS**
LIGHTING MODULE OF A VEHICLE
MODULE D'ÉCLAIRAGE POUR UN VÉHICULE

(30) Priorität: 09.02.2016 DE 102016201882
(43) Veröffentlichungstag der Anmeldung: 19.12.2018
(73) Patentinhaber: Bayerische Motoren Werke Aktiengesellschaft, 80809 München (DE)
(72) Erfinder: WILLMANN, Tom, 81379 München (DE); ALTINGER, Florian, 80802 München (DE)
(86) Internationale Anmeldenummer: PCT/EP2017/052115
(87) Internationale Veröffentlichungsnummer: WO 2017/137289

(56) Entgegenhaltungen:
- EP-A2- 1 293 382
- DE-A1-102006 042 648
- FR-A1- 2 995 969
- FR-A3- 2 815 696
- JP-A- 2005 082 106
- US-A1- 2010 277 938

## Beschreibung

Die vorliegende Erfindung betrifft ein Leuchtmodul eines Fahrzeugs. Außerdem betrifft die Erfindung ein Fahrzeug, das ein derartiges Leuchtmodul umfasst. Besonders vorteilhaft ist das Leuchtmodul eine Innenraumbeleuchtung.

Aus dem Stand der Technik sind Leuchtmodule für Fahrzeuge bekannt. Solche Leuchtmodule können bspw. Innenraumbeleuchtungen oder Leseleuchten sein. Dabei zeigt der Stand der Technik Leuchtmodule, die zur Bündelung von Licht silberfarbene Reflektoren aufweisen. Auf diese Weise wird das von einem Leuchtmittel erzeugte Licht in eine gewünschte Richtung geleitet. Somit werden definierte Flächen innerhalb des Fahrzeugs beleuchtet.

Leuchtmodule sind beispielsweise aus den Veröffentlichungen EP 1 293 382 A2, JP 2005 082106 A, DE 10 2006 042648 A1 und FR 2 815 696 A3 bekannt.

Um das optische Erscheinungsbild solcher Leseleuchten aufzuwerten, werden diese oftmals mit Zierblenden versehen. Solche Zierblenden können insbesondere lackierte Blenden oder Chromblenden umfassen. Auf diese Weise entsteht ein optisch hochwertiger Eindruck.

Es ist jedoch nachteilig, dass derartige Zierblenden mithilfe eines zusätzlichen Bauteils realisiert werden müssen. Dieses zusätzliche Bauteil ist üblicherweise aus Kunststoff gefertigt und muss somit beschichtet und/oder lackiert werden. Dabei sind Beschichtungen und/oder Lackierungen von Bauteilen sehr kostenintensiv.

Es ist daher Aufgabe der Erfindung, ein Leuchtmodul bereitzustellen, das einfach und kostengünstig zu fertigen und zu montieren ist.

Die Lösung dieser Aufgabe erfolgt durch die Merkmale des unabhängigen Anspruchs. Die Unteransprüche haben bevorzugte Weiterbildungen der Erfindung zum Inhalt.

Die Aufgabe wird somit gelöst durch ein Leuchtmodul, das ein Leuchtmittel, einen Reflektor und eine Abdeckung umfasst. Das Leuchtmodul ist insbesondere Teil eines Fahrzeugs und/oder zur Verwendung in einem Fahrzeug geeignet. Das Leuchtmittel dient zum Aussenden von Licht. Dabei kann das Leuchtmittel eine Glühlampe, eine Leuchtdiode oder ein sonstiges, lichtemittierendes Bauteil umfassen. Der Reflektor ist zum Bündeln des von dem Leuchtmittel ausgesandten Lichts ausgebildet. Somit ist mit dem Reflektor insbesondere ein Bereich definierbar, der von dem Leuchtmodul beleuchtet werden soll. Mit der Abdeckung sind schließlich zumindest das Leuchtmittel und der Reflektor abdeckbar. Die Abdeckung ist vorteilhafterweise lichtdurchlässig, sodass das von dem Leuchtmittel erzeugte Licht durch die Abdeckung hindurchtreten kann. Besonders vorteilhaft sind das Leuchtmittel und der Reflektor in einem Gehäuse angeordnet, wobei die Abdeckung das Gehäuse, insbesondere vollständig, schließt. Erfindungsgemäß ist vorgesehen, dass zumindest ein Sichtteil des Reflektors an zumindest einer Sichtöffnung die Abdeckung durchbricht. Somit ist insbesondere vorgesehen, dass die Abdeckung zumindest eine Sichtöffnung aufweist, wobei das Sichtteil durch die Sichtöffnung ragt. Dabei ist die Sichtöffnung, besonders vorteilhaft vollständig, von dem Sichtteil des Reflektors ausgefüllt. Somit weist die Abdeckung durch das Sichtteil eine Zierblende auf, wobei die Zierblende durch den Reflektor selbst gebildet ist. Dies vereinfacht die Herstellung des Leuchtmoduls, da insbesondere keine zusätzlichen beschichteten Teile benötigt werden. Durch die zusätzliche Verwendung des Reflektors als Zierelement ist die Beschichtung von lediglich einem einzigen Bauteil, nämlich dem Reflektor, notwendig, um ein optisch hochwertiges Aussehen zu erhalten. Dabei ist vorgesehen, dass die Sichtöffnung eine durchgängige Öffnung oder alternativ eine Vielzahl von separaten Öffnungen umfasst. Somit ist insbesondere vorgesehen, dass das Sichtteil des Reflektors die Abdeckung an einer oder an mehreren Stellen durchbricht.

Vorteilhafterweise weist das Leuchtmodul ein Schalterelement auf. Mit dem Schalterelement ist insbesondere das Leuchtmittel des Leuchtmoduls ansteuerbar. Weiterhin ist vorgesehen, dass das Schalterelement von dem Sichtteil zumindest teilweise umrahmt ist. Somit ist einerseits das Schalterelement durch eine Zierblende optisch aufgewertet, andererseits ist eine Suchhilfe für einen Benutzer vorhanden, der durch die Sichtteile des Reflektors, die an den Schalterelementen als Zierteile wirken, das Schalterelement schnell und einfach auffinden kann. Sollten mehrere Schalterelemente vorhanden sein, so ist insbesondere vorgesehen, dass das Sichtteil des Reflektors alle Schalterelemente gemeinsam, zumindest teilweise, umrahmt. In einer anderen Alternative ist vorgesehen, dass das Sichtteil jedes Schalterelement einzeln, zumindest teilweise, umrahmt.

Das Sichtteil ist vorteilhafterweise bündig mit einer Oberfläche der Abdeckung ausgebildet. Somit ist eine ebene Oberfläche der Abdeckung vorhanden, die nicht durch Unebenheiten aufgrund des Sichtteils gestört ist. Für einen Benutzer entsteht somit der Eindruck eines in die Abdeckung eingelassenen Zierelements, wobei für einen Benutzer insbesondere optisch nicht unterscheidbar ist, ob das Zierelement ein eigenes Element oder ein Teil des Reflektors ist. Somit ist ein optisch hochwertiger Eindruck analog zu Leuchtmodulen des Standes der Technik vorhanden, wobei gleichzeitig die Herstellungskosten sowie der Herstellungsaufwand minimiert sind. In einer anderen Alternative ist das Sichtteil derart ausgebildet, dass dieses über die Oberfläche der Abdeckung hinaustritt oder unter der Oberfläche der Abdeckung zurückbleibt. Somit ist einerseits eine haptische Orientierungshilfe für einen Benutzer gegeben, insbesondere dann, wenn das Sichtteil zumindest ein Schalterelement zumindest teilweise umrahmt, andererseits lässt sich das Sichtteil durch Hervorstehen oder Zurückbleiben bezüglich der Oberfläche der Abdeckung vielfältig in ein bereits vorhandenes Design des Fahrzeugs einfügen.

Vorteilhafterweise ist der Reflektor ein oberflächenbeschichtetes Kunststoffelement. Dabei ist insbesondere vorgesehen, dass der Reflektor ein lackiertes und/oder galvanisiertes und/oder pulverbeschichtetes und/oder ein PVD beschichtetes Kunststoffteil ist. Vorteilhafterweise ist der gesamte Reflektor mit demselben Material beschichtet. Insbesondere ermöglicht die Oberflächenbeschichtung des Reflektors eine Reflexion von Licht. Somit ist mit dem Reflektor aufgrund der Oberflächenbeschichtung Licht, das von dem Leuchtmittel ausgesandt ist, reflektierbar.

Bei einer bevorzugten Ausführungsform der Erfindung ist eine Oberflächenbearbeitung des Sichtteils unterschiedlich zu der des restlichen Reflektors. Dabei ist insbesondere vorgesehen, dass der Reflektor ein beschichtetes Kunststoffelement ist. Somit ist vorgesehen, dass durch unterschiedliche Oberflächenbearbeitungen des Kunststoffelements unterschiedliche Beschichtungen vorhanden sind. So kann die Oberflächenbearbeitung insbesondere zu einer glänzenden oder matten Oberfläche führen. Durch die glänzende und/oder matte Oberfläche des Kunststoffelements ist auch die beschichtete Oberfläche glänzend und/oder matt. In einer alternativen Ausführungsform ist der Reflektor nach der Oberflächenbeschichtung oberflächenbearbeitet, sodass wiederum das Sichtteil eine unterschiedliche Oberflächenbearbeitung zu dem übrigen Reflektor aufweist. In einer weiteren alternativen Ausführungsform ist die Oberflächenbearbeitung des Sichtteils identisch zu der des restlichen Reflektors.

Das Sichtteil ist besonders vorteilhaft eine berührungssensitive Oberfläche. Über die berührungssensitive Oberfläche ist insbesondere das Leuchtmittel ansteuerbar. In diesem Fall ist vorgesehen, dass das Sichtteil die Abdeckung großflächig durchbricht, sodass eine von einem Benutzer zu bedienende Oberfläche vorhanden ist. Über diese berührungssensitive Oberfläche kann ein Benutzer vorteilhafterweise das Leuchtmittel ansteuern.

Das Sichtteil ist insbesondere von dem Leuchtmittel hinterleuchtbar. Dabei ist vorgesehen, dass das Sichtteil eine derartige Materialstärke aufweist, dass eine vordefinierte Leuchtstärke der Hinterleuchtung durch das Leuchtmittel vorhanden ist. Auf diese Weise ist einerseits ermöglicht, ein optisch hochwertiges Aussehen zu erhalten, andererseits ermöglicht das Hinterleuchten zumindest des Sichtteils in dem Fall, in dem das Sichtteil zumindest ein Schalterelement zumindest teilweise umrahmt, ein schnelles und zuverlässiges Auffinden des Schalterelements, insbesondere wenn keine oder nur eine geringe Umgebungsbeleuchtung vorhanden ist.

In einem weiteren bevorzugten Ausführungsbeispiel der Erfindung umfasst das Sichtteil eine Symbolik. Die Symbolik kann insbesondere auch an einem Schalterelement des Leuchtmoduls angeordnet sein. Besonders vorteilhaft ist die Symbolik, wie zuvor beschrieben, hinterleuchtet. Mit der Symbolik ist somit ein Bedienen des Leuchtmoduls, insbesondere ein Bedienen von Schalterelementen des Leuchtmoduls, einfach und intuitiv ermöglicht.

Der Reflektor ist bevorzugt einstückig geformt. Somit ist lediglich ein Element bereitzustellen, das insbesondere oberflächenbeschichtet ist. Dieses eine Element ist einerseits als Reflektor, andererseits als Zierelement verwendet. Dies wird dadurch erreicht, dass das Sichtteil des Reflektors an durch zumindest eine Sichtöffnung der Abdeckung ragt.

Die Erfindung betrifft schließlich ein Fahrzeug. Das Fahrzeug umfasst ein Leuchtmodul wie zuvor beschrieben. Dabei ist vorteilhafterweise vorgesehen, dass das Leuchtmodul eine Innenraumbeleuchtung des Fahrzeugs ist. Somit ist das Leuchtmodul vorteilhafterweise eine Panoramadachleuchte und/oder eine Fonddachleuchte und/oder eine Fahrerleseleuchte und/oder eine Beifahrerleseleuchte.

Weitere Einzelheiten, Merkmale und Vorteile der Erfindung ergeben sich aus der nachfolgenden Beschreibung und den Figuren. Es zeigen:
- Figur 1: eine schematische Schnittansicht eines Leuchtmoduls gemäß einem ersten Ausführungsbeispiel der Erfindung,
- Figur 2: eine schematische Abbildung des Leuchtmoduls gemäß dem ersten Ausführungsbeispiel der Erfindung,
- Figur 3: eine schematische Schnittansicht eines Leuchtmoduls gemäß einem zweiten Ausführungsbeispiel der Erfindung,
- Figur 4: eine schematische Abbildung des Leuchtmoduls gemäß dem zweiten Ausführungsbeispiel der Erfindung, und
- Figur 5: eine schematische Abbildung eines Fahrzeugs gemäß einem Ausführungsbeispiel der Erfindung.

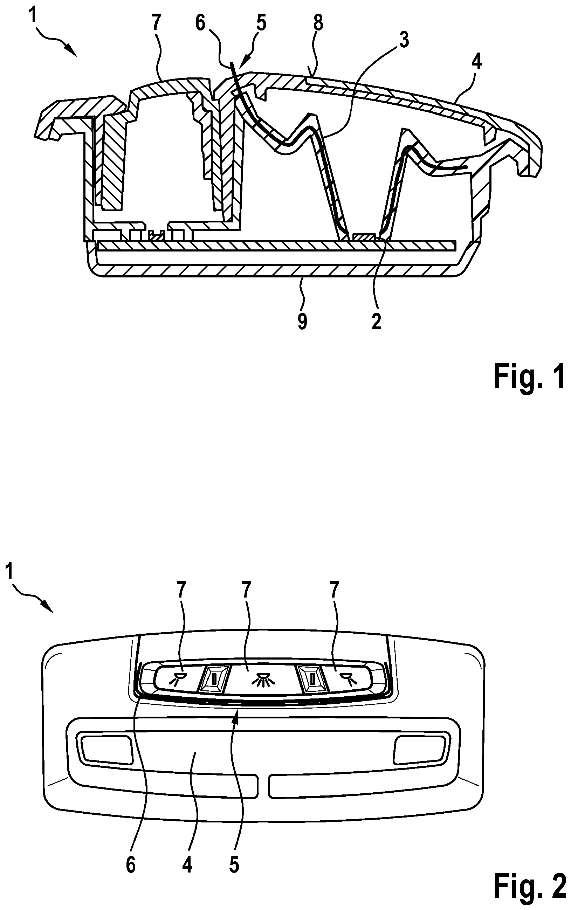

Figur 1 zeigt schematisch ein Leuchtmodul 1 gemäß einem ersten Ausführungsbeispiel der Erfindung. Dabei ist in Figur 1 eine Schnittansicht durch das Leuchtmodul 1 gezeigt.

Figur 2 zeigt dasselbe Leuchtmodul 1 gemäß dem ersten Ausführungsbeispiel der Erfindung in einer Aufsicht.

Das Leuchtmodul 1 umfasst ein Leuchtmittel 2 und einen Reflektor 3. Dabei sind das Leuchtmittel 2 und der Reflektor 3 in einem Gehäuse 9 angeordnet. Eine Abdeckung 4 schließt das Gehäuse 9 ab, sodass die Abdeckung 4 den Reflektor 3 und das Leuchtmittel 2 abdeckt.

Das Leuchtmittel 2 ist in dem ersten Ausführungsbeispiel eine Leuchtdiode. Alternativ kann ein anderes Licht emittierendes Element, wie insbesondere eine Leuchtstoffröhre, eine Organische Leuchtdiode, eine Laserleuchtdiode-, eine Glühlampe oder sonstige Licht erzeugende Betriebsmittel verwendet werden. Der Reflektor 3 ist ein Kunststoffelement, das eine Oberflächenbeschichtung aufweist. Durch die Formung des Reflektors 3 ist das von dem Leuchtmittel 2 emittierte Licht bündelbar und auf eine vordefinierte Fläche außerhalb des Leuchtmoduls lenkbar. Somit ist mit dem Leuchtmodul 1 eine vordefinierte Fläche beleuchtbar. Besonders vorteilhaft ist vorgesehen, dass das Leuchtmodul 1 mehrere Leuchtmittel 2 aufweist, die unabhängig voneinander einschaltbar und ausschaltbar sind, wobei der Reflektor 3 derart geformt ist, dass unterschiedliche Bereiche außerhalb des Leuchtmoduls 1 unabhängig voneinander angeleuchtet werden können.

Der Reflektor 3 weist eine Oberflächenbeschichtung auf. Die Oberflächenbeschichtung ist vorteilhafterweise eine Lackierung oder ein galvanisch aufgebrachter Überzug oder eine PVD Beschichtung, der eine Reflexion von Licht, das von dem Leuchtmittel 2 ausgesandt ist, verbessert. Dabei ist der Reflektor 3 je nach Anwendungsfall derart ausgebildet, dass dieser wahlweise matte und glänzende Oberflächen aufweist. Somit lässt sich Licht von dem Leuchtmittel 2 diffus über eine große Fläche oder alternativ konzentriert auf einzelne Lichtpunkte leiten.

Um einerseits ein äußeres Erscheinungsbild des Leuchtmoduls 1 zu verbessern und um andererseits Schalterelemente 7 des Leuchtmoduls 1 zu betonen, ist vorgesehen, dass die Abdeckung 4 eine Sichtöffnung 5 aufweist. An der Sichtöffnung 5 ragt ein Sichtteil 6 des Reflektors 3 durch die Abdeckung 4. Insbesondere umfasst die Sichtöffnung 5 einen Schlitz, durch den das Sichtteil 6 des Reflektors 3 ragt. In dem in Figur 1 gezeigten Ausführungsbeispiel ist vorgesehen, dass das Sichtteil 6 über die Oberfläche 8 der Abdeckung 4 hervorsteht. In einer alternativen Ausführungsform ist das Sichtteil 6 eben mit der Oberfläche 8 der Abdeckung 4 ausgebildet.

Wie insbesondere aus Figur 2 ersichtlich ist, ist der Sichtbereich 5 derart angeordnet, dass das Sichtteil 6 alle Schalterelemente 7 des Leuchtmoduls 1 gemeinsam teilweise umrahmt. Somit fungiert das Sichtteil 6 einerseits als Zierelement, das den optischen Eindruck des Leuchtmoduls 1 aufwertet, andererseits ist das Sichtteil 6 eine Suchhilfe für einen Benutzer, der die Schalterelemente 7 bedienen möchte.

Der Reflektor 3 ist einstückig ausgebildet, sodass insbesondere auch das Sichtteil 6 einstückig mit dem übrigen Reflektor 3 ausgebildet ist. Somit ist ein einziges Element innerhalb des Leuchtmoduls 1 vorhanden, das eine Oberflächenbeschichtung aufweisen muss. Durch die Oberflächenbeschichtung des Reflektors 3 ist somit einerseits ein Zierelement realisiert, andererseits ist das von dem Leuchtmittel 2 ausgesandte Licht bündelbar und auf einen vordefinierten Bereich leitbar.

Die Oberflächenbeschichtung ist insbesondere für den gesamten Reflektor 3 identisch. Dabei ist außerdem vorgesehen, dass der Reflektor 3 eine Oberflächenbearbeitung aufweist, wobei die Oberflächenbearbeitung des Sichtteils 6 unterschiedlich zu der Oberflächenbearbeitung des übrigen Reflektors 3 ist. So ist insbesondere die Oberflächenbearbeitung des Sichtteils 6 nach Maßgaben eines Zierelements ausgelegt, während der übrige Reflektor 3 eine Oberflächenbearbeitung aufweist, die nach Maßgaben einer optimalen Reflexion von Licht ausgelegt ist. Bei dem Aufbringen der Oberflächenbeschichtung ist insbesondere vorgesehen, dass die Oberflächenbearbeitung erhalten bleibt, sodass auch die Oberflächenbeschichtung unterschiedliche Eigenschaften aufweist.

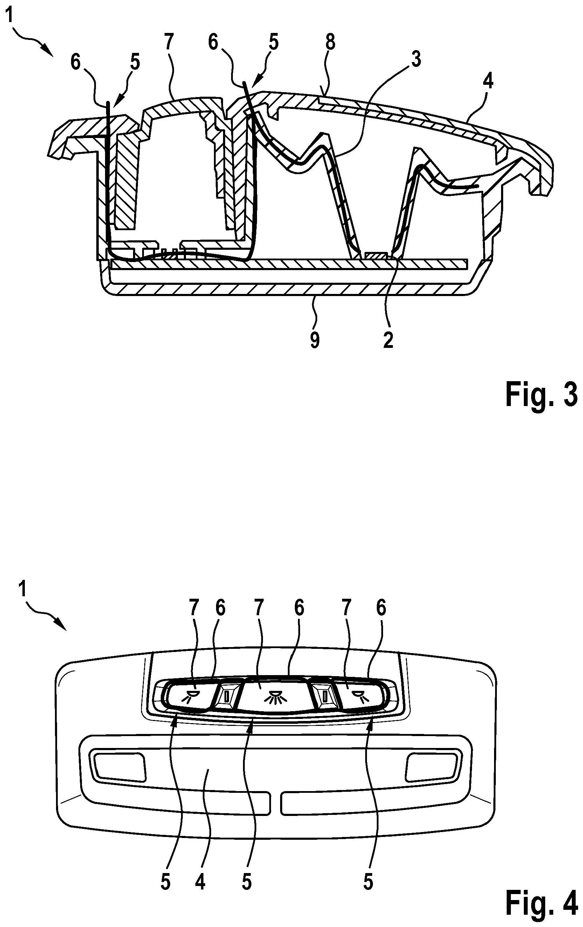

Figur 3 zeigt schematisch ein Leuchtmodul 1 gemäß einem zweiten Ausführungsbeispiel der Erfindung. Dabei ist in Figur 3 eine Schnittansicht durch das Leuchtmodul 1 gezeigt. Figur 4 zeigt wiederum eine Aufsicht auf das Leuchtmodul 1 gemäß dem zweiten Ausführungsbeispiel der Erfindung.

Im Grundsatz ist das Leuchtmodul 1 gemäß dem zweiten Ausführungsbeispiel der Erfindung identisch zu dem Leuchtmodul 1 gemäß dem ersten Ausführungsbeispiel der Erfindung. Lediglich durch die Sichtöffnung 5 und den Reflektor 3 unterscheidet sich das Leuchtmodul 1 gemäß dem zweiten Ausführungsbeispiel von dem Leuchtmodul 1 gemäß dem ersten Ausführungsbeispiel. So ist der Reflektor 3 in dem Leuchtmodul 1 gemäß dem zweiten Ausführungsbeispiel vergrößert, sodass die Schalterelemente 7 des Leuchtmodul 1 einzeln vollständig von dem Sichtteil 6 des Reflektors 3 umrahmt sind. Auf diese Weise ist jedes einzelne Schalterelement 7 durch den jeweiligen Sichtbereich 6 des Reflektors 3 einzeln mit einem Zierelement betont. Durch den im Vergleich zum ersten Ausführungsbeispiel geänderten Reflektor 3 ist auch die Sichtöffnung 5 geändert, die insgesamt drei separate Öffnungen umfasst, wobei jede der separaten Öffnungen ein Schalterelement 7 umrahmt Ansonsten entspricht der Aufbau des Reflektors 3 in dem Leuchtmodul 1 gemäß dem zweiten Ausführungsbeispiel dem Aufbau des Reflektors 3 des Leuchtmoduls 1 gemäß dem ersten Ausführungsbeispiel der Erfindung.

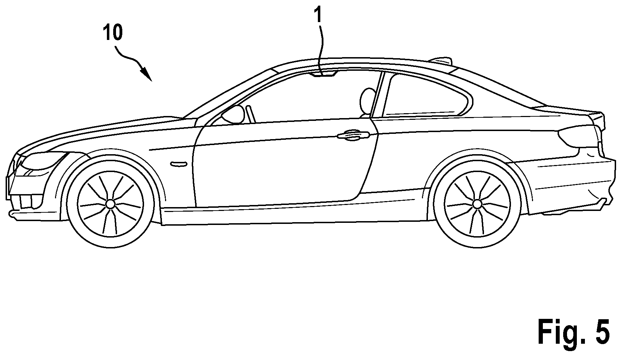

Figur 5 zeigt schließlich ein Fahrzeug 10, das ein Leuchtmodul 1 gemäß dem ersten Ausführungsbeispiel oder dem zweiten Ausführungsbeispiel aufweist. Dabei ist das Leuchtmodul 1 insbesondere eine Dachbeleuchtung, die vorteilhafterweise verschiedene Bereiche des Innenraums des Fahrzeugs 10 ausleuchten kann. Durch die Verwendung des Reflektors 3 einerseits zum Bündeln und Lenken von Licht und andererseits als Zierelement ist das Leuchtmodul 1 einfach und kostengünstig herstellbar.

### Bezugszeichenliste:

- 1: Leuchtmodul
- 2: Leuchtmittel
- 3: Reflektor
- 4: Abdeckung
- 5: Sichtbereich
- 6: Sichtteil
- 7: Schalterelement
- 8: Oberfläche
- 9: Gehäuse
- 10: Fahrzeug

## Patentansprüche

1. Leuchtmodul (1) für ein Fahrzeug (10), umfassend
- ein Leuchtmittel (2) zum Aussenden von Licht,
- einen Reflektor (3) zum Bündeln des von dem Leuchtmittel (2) ausgesandten Lichts, und
- eine Abdeckung (4) zum Abdecken von Leuchtmittel (2) und Reflektor (3),
**dadurch gekennzeichnet, dass** -zumindest ein Sichtteil (6) des Reflektors (3) durch zumindest eine Sichtöffnung (5) der Abdeckung (4) ragt, wobei die Abdeckung lichtdurchlässig ist.

2. Leuchtmodul (1) nach Anspruch 1, **gekennzeichnet durch** zumindest ein Schalterelement (7), wobei das Schalterelement (7) von dem Sichtteil (6) zumindest teilweise umrahmt ist.

3. Leuchtmodul (1) nach einem der vorgehenden Ansprüche, **dadurch gekennzeichnet, dass** das Sichtteil (6) bündig mit einer Oberfläche (8) der Abdeckung (4) ausgebildet ist.

4. Leuchtmodul (1) nach einem der vorhergehenden Ansprüche, **dadurch gekennzeichnet, dass** der Reflektor (3) ein oberflächenbeschichtetes Kunststoffelement ist.

5. Leuchtmodul (1) nach einem der vorhergehenden Ansprüche, **dadurch gekennzeichnet, dass** eine Oberflächenbearbeitung des Sichtteils (6) unterschiedlich zu derjenigen des restlichen Reflektors (3) ist.

6. Leuchtmodul (1) nach einem der vorhergehenden Ansprüche, **dadurch gekennzeichnet, dass** das Sichtteil (6) eine berührungssensitive Oberfläche darstellt, über die das Leuchtmittel (2) ansteuerbar ist.

7. Leuchtmodul (1) nach einem der vorhergehenden Ansprüche, **dadurch gekennzeichnet, dass** das Sichtteil (6) von dem Leuchtmittel (2) hinterleuchtbar ist.

8. Leuchtmodul (1) nach einem der vorhergehenden Ansprüche, **dadurch gekennzeichnet, dass** das Sichtteil (6) eine Symbolik umfasst.

9. Leuchtmodul (1) nach einem der vorhergehenden Ansprüche, **dadurch gekennzeichnet, dass** der Reflektor (3) einstückig geformt ist.

10. Fahrzeug (10) umfassend ein Leuchtmodul (1) nach einem der vorhergehenden Ansprüche, wobei das Leuchtmodul (1) insbesondere eine Innenraumbeleuchtung ist.

## Claims

1. Light-emitting module (1) for a vehicle (10), comprising
- a light-emitting means (2) for emitting light,
- a reflector (3) for bundling the light emitted by the light-emitting means (2), and
- a cover (4) for covering light-emitting means (2) and reflector (3),
**characterized in that** at least one visible part (6) of the reflector (3) protrudes through at least one visible opening (5) of the cover (4), wherein the cover is light-transmissive.

2. Light-emitting module (1) according to Claim 1, **characterized by** at least one switch element (7), wherein the switch element (7) is at least partially framed by the visible part (6).

3. Light-emitting module (1) according to one of the preceding claims, **characterized in that** the visible part (6) is embodied to be flush with a surface (8) of the cover (4).

4. Light-emitting module (1) according to one of the preceding claims, **characterized in that** the reflector (3) is a surface-coated plastics element.

5. Light-emitting module (1) according to one of the preceding claims, **characterized in that** a surface finish of the visible part (6) differs from that of the remaining reflector (3).

6. Light-emitting module (1) according to one of the preceding claims, **characterized in that** the visible part (6) represents a touch-sensitive surface via which the light-emitting means (2) is able to be actuated.

7. Light-emitting module (1) according to one of the preceding claims, **characterized in that** the visible part (6) is able to be backlit by the light-emitting means (2).

8. Light-emitting module (1) according to one of the preceding claims, **characterized in that** the visible part (6) comprises a symbolic representation.

9. Light-emitting module (1) according to one of the preceding claims, **characterized in that** the reflector (3) is formed in one piece.

10. Vehicle (10) comprising a light-emitting module (1) according to one of the preceding claims, wherein the light-emitting module (1) is in particular an interior light.

## Revendications

1. Module lumineux (1) destiné à un véhicule (10), ledit module lumineux comprenant
- un moyen lumineux (2) destiné à émettre de la lumière,
- un réflecteur (3) destiné à focaliser la lumière émise par le moyen lumineux (2), et
- un couvercle (4) destiné à recouvrir le moyen lumineux (2) et le réflecteur (3),
**caractérisé en ce qu'**au moins une partie visible (6) du réflecteur (3) fait saillie à travers au moins une ouverture de visualisation (5) du capot (4), le capot laissant passer la lumière.

2. Module lumineux (1) selon la revendication 1, **caractérisé par** au moins un élément de commutation (7), l'élément de commutation (7) étant au moins partiellement encadré par la partie visible (6).

3. Module lumineux (1) selon l'une des revendications précédentes, **caractérisé en ce que** la partie visible (6) est formée à fleur d'une surface (8) du capot (4).

4. Module lumineux (1) selon l'une des revendications précédentes, **caractérisé en ce que** le réflecteur (3) est un élément en matière synthétique revêtu en surface.

5. Module lumineux (1) selon l'une des revendications précédentes, **caractérisé en ce qu'**un traitement de surface de la partie visible (6) est différent de celui du reste du réflecteur (3).

6. Module lumineux (1) selon l'une des revendications précédentes, **caractérisé en ce que** la partie visible (6) représente une surface tactile permettant de commander le moyen lumineux (2).

7. Module lumineux (1) selon l'une des revendications précédentes, **caractérisé en ce que** la partie visible (6) peut être rétro-éclairée par le moyen lumineux (2).

8. Module lumineux (1) selon l'une des revendications précédentes, **caractérisé en ce que** la partie visible (6) comporte un ensemble de symboles.

9. Module lumineux (1) selon l'une des revendications précédentes, **caractérisé en ce que** le réflecteur (3) est formé d'une seule pièce.

10. Véhicule (10) comprenant un module lumineux (1) selon l'une des revendications précédentes, le module lumineux (1) étant notamment un éclairage d'habitacle.
